# EUROPÄISCHE PATENTSCHRIFT

(11) **EP 1 726 843 B1**
(45) Veröffentlichungstag und Bekanntmachung des Hinweises auf die Patenterteilung: **04.04.2018**
(21) Anmeldenummer: 05011340.6
(22) Anmeldetag: 25.05.2005
(51) Int. Cl.: F16D 25/10

(54) **Kupplungsanordnung**
Clutch assembly
Ensemble embrayage

(43) Veröffentlichungstag der Anmeldung: 29.11.2006
(73) Patentinhaber: BorgWarner, Inc., Auburn Hills, MI 48326-2872 (US)
(72) Erfinder: Gerlach, Martin, 68526 Ladenburg (DE); Gold, Eckart, D-68766 Hockenheim (DE)
(74) Vertreter: Westphal, Mussgnug & Partner Patentanwälte mbB

(56) Entgegenhaltungen:
- EP-A1- 1 568 906
- WO-A-02/40900
- DE-A1- 10 143 834
- US-A1- 2005 103 594

## Beschreibung

Die Erfindung betrifft eine Kupplungsanordnung nach dem Oberbegriff des Patentanspruchs 1.

Aus dem Stand der Technik sind Kupplungsanordnungen unterschiedlichster Ausführungen bekannt. Lamellenkupplungen zeichnen sich dadurch aus, dass durch Reibschluss Momente in einem bestimmten Bereich stufenlos übertragen werden können. Üblicherweise besteht eine solche Lamellenkupplung aus einem betätigenden Element (Betätigungskolben), einer Druckplatte oder ersten Lamelle, dem Lamellenpaket aus mehreren abwechselnd mit dem antreibenden bzw. angetriebenen Lamellenträger verbundenen Reiblamellen sowie einer Endscheibe, die fest oder demontierbar mit einem der Lamellenträger verbünden ist und die vom Betätigungskolben eingeleitete Axialkräfte abstützt.

Gerade diese oftmals spielbehaftete Anbindung der Endscheibe führt zu funktionellen und monetären Nachteilen. So führt eine nicht idealsteife Endscheibe zu größerer elastischer Deformation, die sich sowohl negativ auf das Ansprechverhalten der Kupplung als auch auf den benötigten Bauraum auswirkt. Gleichzeitig ist die separate Ausbildung einer Endscheibe mit höheren Material- und Montagekosten verbunden.

Ausgegangen wird nachfolgend von einer Kupplungsanordnung, wie sie beispielsweise in der EP 1 195 537 A1 beschrieben ist. Dort ist eine Doppelkupplung in achsparalleler Bauart beschrieben. Diese Doppelkupplung umfasst zwei Einzelkupplungen, welche im wesentlichen identisch ausgebildet sind. Jede Kupplung umfasst einen Außenlamellen tragenden Außenlamellenträger und einen Innenlamellen tragenden Innenlamellenträger, wobei die Außenlamellen und die Innenlamellen ein Lamellentapaket bilden. Es ist eine Endscheibe vorgesehen, gegen die sich das Lamellenpaket beim Betätigen der Kupplung abstützt. Neben den für die vorliegende Erfindung nicht maßgeblichen Merkmalen, dass ein gemeinsamer Innenlamellenträger für beide Kupplungen vorgesehen ist und dass nur eine Endscheibe vorgesehen ist, welche die Endscheibe für beide in Achsrichtung nebeneinander angeordnete Lamellenpakete der beiden Kupplungen bildet, lehrt die EP 1 195 537 A1, dass die Endscheibe einstückig mit dem gemeinsamen Innenlamellenträger der Doppelkupplung ausgebildet ist.

Obwohl sich eine Doppelkupplung der dort beschriebenen Art dem Grunde nach bewährt hat, ist die Fertigung eines derartigen gemeinsamen Innenlamellenträgers mit angeformter Endscheibe vergleichsweise kompliziert und aufwendig. Die WO 03/004893 A1 offenbart eine Kupplungsanordnung in achsparalleler Bauweise gemäß dem Oberbegriff des Anspruchs 1. Weiter offenbart die DE 101 43 834 A1 eine Kupplungsanordnung, radial geschaltet, gemäß dem Oberbegriff des Anspruchs 4.

Der Erfindung liegt daher die Aufgabe zugrunde, eine Kupplungseinrichtung der gattungsgemäßen Art derart auszuführen und weiterzubilden, dass sie vergleichsweise einfach durch an sich im Kupplungsbau übliche Prozesse hergestellt werden kann, mit vergleichsweise wenigen Bauteilen auskommt und einfach montiert werden kann.

Diese Aufgabe wird durch eine Kupplungsanordnung mit den Merkmalen der Patentansprüche 1 oder 4 gelöst.

Vorteilhafte Ausführungen und Weiterbildungen der Erfindung sind in den Unteransprüchen angegeben.

Erfindungsgemäß ist daher vorgesehen, dass der eine der Lamellenträger als Halbschale mit einem zylindrischen Bereich und mit einem Bodenbereich ausgebildet ist und dass der Bodenbereich die Endscheibe bildet. Die Herstellung von Halbschalen ist im Kupplungsbau üblich. Weiterhin braucht weder eine separate Endscheibe noch ein deren Axialverschiebbarkeit begrenzender Sicherungsring vorgesehen werden. Die Montage wird auf diese Weise ebenfalls signifikant vereinfacht.

Grundsätzlich kann der die Endscheibe bildende Bodenbereich des Lamellenträgers jede beliebige Gestalt aufweisen, die insbesondere auch der herkömmlicher Endplatten gleicht oder zumindest nahe kommt. Durch entsprechende Formgebung kann eine sehr hohe Steifigkeit erreicht werden, die einer reinen Platte weit überlegen ist. Es hat sich als besonders vorteilhaft und leicht herstellbar herausgestellt, wenn der Bodenbereich wenigstens eine zu einer benachbarten Lamelle weisende Ringkuppe aufweist. Zum einen erzielt man durch diese Form eine hohe Steifigkeit, zum andern lässt sich dadurch ein vorgegebener mittlerer Kraftangriffsradius an der benachbarten Lamelle einstellen. Dies hat zum einen Vorteile, was den Krafteintrag selbst betrifft, zum andern lässt sich die lokale thermische Beanspruchung der Kupplung gezielt beeinflussen.

Die Erfindung lässt sich grundsätzlich bei Doppel- oder Mehrfachkupplungen einsetzen. So können alle weiteren Kupplungen einer Doppel-oder Mehrfachkupplung in der erfindungsgemäßen Art ausgestaltet sein.

Ein besonders interessantes Einsatzgebiet ist bei Doppelkupplungen in paralleler Bauweise gegeben. Hier werden zwei Lamellenträger in einem Bauteil zusammengefasst. Konkret können nach der Erfindung die zwei Lamellenträger im Bereich der integrierten Endscheibe gegenläufig miteinander verbunden sein, so das sich die Endscheiben ggf. gegenseitig unterstützen können. Im Idealfall, aber nicht in zwingender Weise, sind in dieser Ausführungsart beide Bauteile identisch ausgeführt, so dass der optimale Kosteneffekt erreicht werden kann.

Auch bei Doppelkupplungen in radial geschachtelter Bauart lässt sich die Erfindung einsetzen. Es können separate Lamellenträger vorhanden sein, die in der erfindungsgemäßen Weise einstückig mit der Endscheibe gebildet sind und die Form einer Halbschale aufweisen. Es kann auch ein gemeinsamer Lamellenträger für die radial äußere und die radial innere Kupplung vorhanden sein, welche eine einstückig mit dem Lamellenträger geformte Endscheibe für eine der beiden Kupplungen trägt. Schließlich ist es auch möglich, einen gemeinsamen Lamellenträger aus zwei Lamellenträgern in Form von Halbschalen zu bilden, deren zylindrische, die Lamellen tragenden Bereiche drehfest miteinander verbunden sind und deren Bodenbereiche die Endscheiben für die beiden Kupplungen bilden.

Die Erfindung wird nunmehr anhand von Zeichnungen näher beschrieben. Es zeigen:
- Figur 1:: ein erstes Ausführungsbeispiel einer in erfindungsgemäßer Weise ausgestalteten Doppelkupplungseinrichtung mit einer Doppelkupplung in radial geschachtelter Bauart im Axialhalbschnitt,
- Figur 2:: ein zweites Ausführungsbeispiel einer ausgestalteten Doppelkupplungseinrichtung mit einer Doppelkupplung in radial geschachtelter Bauart im Axialhalbschnitt,
- Figur 3:: ein drittes Ausführungsbeispiel einer in erfindungsgemäßer Weise ausgestalteten Doppelkupplungseinrichtung mit einer Doppelkupplung in achsparalleler Bauart im Axialhalbschnitt.

Gleiche oder funktionsgleiche Bestandteile der jeweiligen Kupplungen sind in allen Figuren mit identischen Bezugszeichen versehen.

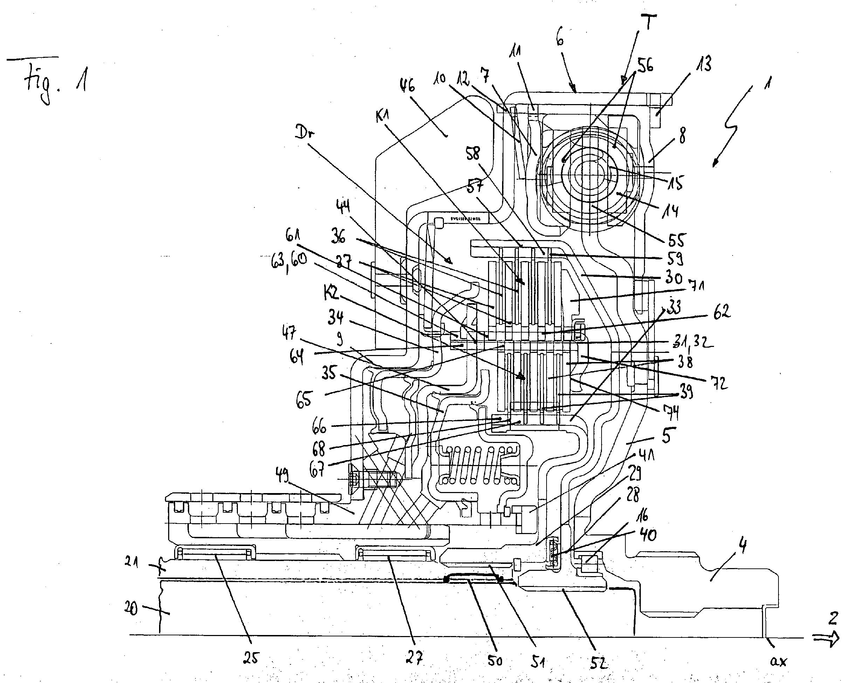

Die Figur 1 zeigt ein erstes Ausführungsbeispiel einer erfindungsgemäßen Kombination 1 aus einem Torsionsschwingungsdämpfer T und einer Doppelkupplung Dr in radial geschachtelter Anordnung im Axialhalbschnitt. Torsionsschwingungsdämpfer 1 und Doppelkupplung Dr sind in einem gemeinsamen Gehäuse untergebracht. Der Torsionsschwingungsdämpfer T ist eingangsseitig mit einer hier nicht dargestellten Verbrennungskraftmaschine koppelbar und von dieser antreibbar. Der Ausgang des Torsionsschwingungsdämpfers T ist mit einem Eingang der Doppelkupplung Dr drehfest verbunden. Die Doppelkupplung Dr ist ausgangsseitig mit zwei Getriebeeingangswellen 20, 21 verbunden, über welche ein über den Torsionsschwingungsdämpfer T eingeleitetes Drehmoment wahlweise ausgeleitet werden kann.

Der Torsionsschwingungsdämpfer T gemäß dieser Zeichnungsfigur 1 ist grundsätzlich in an sich üblicher Art und Weise ausgebildet. Er umfasst ein Primärelement 5 in der Art einer Scheibe sowie ein Sekundärelement 6 mit im vorliegenden Ausführungsbeispiel zwei Halbschalen 7, 8, welche drehfest über eine Verzahnung 11 miteinander verbunden sind.

Primär- und Sekundärelemente 5, 6 sind über eine Federeinrichtung miteinander gekoppelt und um eine Neutralposition um eine Drehachse ax gegeneinander verdrehbar. Die Federeinrichtung besteht aus einer Mehrzahl in Umfangsrichtung hintereinander angeordneter Schraubenfedersätze. Ein Schraubenfedersatz besteht aus jeweils einer Innenfeder 15 und einer diese umgreifenden Außenfeder 15. Benachbarte Schraubenfedersätze sind mit Hilfe von hier nicht dargestellten Gleitschuhen, welche in der Fachsprache auch als Federaufteiler bezeichnet werden, voneinander beabstandet. Primär- und Sekundärelemente 5, 6 umfassen jeweils in diametraler Anordnung zwei Mitnehmer 55, 56, welche jeweils zwischen die in Umfangsrichtung verlaufende Kette der Schraubenfedern 14, 15 eingesetzt sind, so dass ein antriebsseitig an Primärelement 5 eingekoppeltes Drehmoment mittels jeweils eines in der Figur 1 dargestellten Primärmitnehmers 55 zunächst auf die aus den Schraubenfedern 14, 15 bestehende Federkette und von dort auf den jeweiligen korrespondierenden Sekundärmitnehmer 56 des Sekundärelements 6 übertragen wird.

Die beiden Halbschalen 7, 8, nämlich die antriebsseitige Halbschale 8 und die abtriebsseitige Halbschale 7 sind derart ausgebildet, dass sie die aus Schraubenfedern 14 bestehende Kette im Wesentlichen formschlüssig aufnehmen. Beide Halbschalen 9, 10 sind über die Verzahnung 11 drehfest miteinander verbunden und mit Hilfe eines in eine Umfangsnut der abtriebsseitigen Halbschale 7 eingreifenden Sicherungsrings 13 gegeneinander axial im wesentlichen unverschieblich gesichert. Diese beiden Halbschalen 7, 8 dienen zur vorzugsweise reibungsarmen Führung der Federn 14, 15 bzw. der zwischen den Federn 14, 15 in Umfangsrichtung angeordneten Gleitschuhe/Federaufteiler sowie gegebenenfalls vorhandener Mitnehmer 55, 56 und Federsätze trennender (ebenfalls nicht gezeichneter) Endschuhe.

Auch die Doppelkupplung Dr selbst ist in an sich üblicher Weise aufgebaut. Sie umfasst zwei Kupplungen K1, K2, wobei das Lamellenpaket der einen Kupplung K2 radial innerhalb des Lamellenpakets der anderen Kupplung K1 angeordnet ist. Darüber hinaus sind beide Lamellenpakete in etwa im gleichen axialen Abschnitt angeordnet. Aufgrund dieser radial geschachtelten Anordnung der Lamellenpakete wird die Kupplung K1 mit dem radial äußeren Lamellenpaket im Allgemeinen und nachfolgend im Besonderen als radial äußere Lamellenkupplung K1 und die andere als radial innere Lamellenkupplung K2 sowie die Doppelkupplung Dr selbst als Doppelkupplung Dr in radial geschachtelter Anordnung bezeichnet.

Die radial äußere Kupplung K1 umfasst einen Außenlamellenträger 30 sowie einen Innenlamellenträger 32. Beide Lamellenträger 30, 32 sind in der Art von Halbschalen ausgebildet. Der zylindrische Teil 57 des Außenlamellenträgers 30 weist am Innenumfang eine Innenverzahnung 58 auf. In diese Innenverzahnung 58 greift jeweils in eine entsprechende Außenverzahnung 59 von im vorliegenden Ausführungsbeispiel als Belaglamellen ausgeführten Außenlamellen 36 ein. In korrespondierender Weise weist der zylindrische, Teil 60 des Innenlamellenträgers 32 am Außenumfang eine Außenverzahnung 61 auf, in welche eine entsprechende Innenverzahnung 62 hier als Stahllamellen ausgeführter Innenlamellen 37 eingreift. Außenlamellen 36 und Innenlamellen 37 sind derart zwischen die zylindrischen Bereiche 57, 60 der Außen- bzw. Innenlamellenträger 30, 32 eingeführt, dass in axialer Richtung jeweils auf eine Außenlamelle 36 eine Innenlamelle 37 folgt und umgekehrt. Die Außen- und Innenlamellen 36, 37 sind mittels eines Betätigungskolbens 34 in Reibeingriff und außer Reibeingriff verbringbar.

Die radial innere Kupplung K2 ist prinzipiell in gleicher Weise wie die radial äußere Lamellenkupplung K1 ausgeführt. Auch hier ist ein halbschalenförmiger Außenlamellenträger 31 und ein halbschalenförmiger Innenlamellenträger 33 vorgesehen. Eine Besonderheit der gesamten Kupplungsanordnung besteht darin, dass der Außenlamellenträger 31 der radial inneren Kupplung K2 und der Innenlamellenträger 32 der radial äußeren Kupplung K1 einstückig ausgebildet sind. Der Außenlamellenträger 31 der radial inneren Kupplung K2 bildet somit gleichzeitig den Innenlamellenträger 32 der radial äußeren Kupplung K1 und umgekehrt. Nachfolgend wird daher für diesen die Außenlamellen 38 der radial inneren Kupplung K2 und die Innenlamellen 37 der radial äußeren Kupplung K1 tragenden Lamellenträger 31, 32 die Bezeichnung gemeinsamer Lamellenträger 31, 32 verwendet.

Der zylindrische Teil 63 des gemeinsamen Lamellenträgers 31, 32 weist innenumfangsseitig eine Innenverzahnung 64 auf, in welche eine Außenverzahnung 65 entsprechender Außenlamellen 38 eingreift. Korrespondierend hierzu weist der zylindrische Abschnitt 66 der Innenlamellenträgerhalbschale 33 eine Außenverzahnung 67 auf, welche die Innenverzahnungen 68 entsprechender Innenlamellen 39 aufnimmt. Eine Innenlamelle 39 ist hiermit benachbart zu zwei Außenlamellen 38, eine Außenlamelle 38 ist benachbart zu zwei Innenlamellen 39 ein Lamellenpaket bildend angeordnet. Die Außen- und Innenlamellen 38, 39 können mit Hilfe eines Betätigungskolbens 35 in Reibeingriff und außer Reibeingriff verbracht werden.

Der gemeinsame Lamellenträger 31,32 der radial inneren und der radial äußeren Kupplungen K1, K2 ist über eine Verzahnung 44 drehfest mit einer Seitenscheibe 47 verbunden. Diese Seitenscheibe 47 ist wiederum drehfest mit einer Kupplungsnabe 49 verbunden. Die Kupplungsnabe 49, welche im Wesentlichen die Form eines Zylinders aufweist, ist am Außenumfang einer der Getriebeeingangswellen 21 um die Drehachse ax drehbar gelagert. Die drehbare Lagerung erfolgt über zwei Radialnadellager 25, 27.

Die Getriebeeingangswelle 21 ist in der Form eines Hohlzylinders ausgeführt. Sie ist von einer weiteren als Vollwelle ausgeführten Getriebeeingangswelle 22 zentral durchsetzt und auf dieser mittels eines Radialnadellagers 50 drehbar gelagert. Die Hohlwelle 21 ist über eine Steckverzahnung 51 mit einer Nabe 29 des Innenlamellenträgers 33 der radial inneren Kupplung K2 verbunden. Die Vollwelle 20 ist über eine Steckverzahnung 52 mit einer Nabe 28 des Außenlamellenträgers 32 der radial äußeren Lamellenkupplung K1 drehfest verbunden. Auf der Nabe 28 des Außenlamellenträgers 32 der radial äußeren Lamellenkupplung K1 ist das Primärelement 5 des Torsionsschwingungsdämpfers T über ein Radialnadellager mit axialer Abstützfunktion 16 um die Drehachse ax drehbar gelagert.

Der Innenlamellenträger 32 der radial äußeren Lamellenkupplung K1 und der Innenlamellenträger 33 der Kupplung K2 bilden die Ausgangsseiten der Doppelkupplung. Die Kupplungsnabe 49 und der mit dieser drehfest verbundene gemeinsame Lamellenträger 31, 32 der radial äußeren und der radial inneren Kupplungen K1, K2 stellen nunmehr die Eingangsseite der Doppelkupplung Dr dar. Diese Eingangsseite der Doppelkupplung Dr ist mit der durch das Sekundärelement 6 gebildeten Ausgangsseite des Torsionsschwingungsdämpfers T über eine Kupplungsglocke 9 miteinander verbunden. Die Kupplungsglocke 9 ist zu diesem Zweck an ihrem radial inneren Rand mit der Kupplungsnabe 49 verbunden. Am radial äußeren Rand besteht eine Kopplung über eine Verzahnung 12 zur Halbschale 8 des Torsionsschwingungsdämpfers T. Zur Erhöhung der Trägheit der Kupplungsglocke 9 ist an diese eine zusätzliche Schwungmasse 46 angebracht.

Drei Axiallager 40, 41, 16 beabstanden die gegeneinander verdrehbaren Naben 49, 29, 28, 4 von Kupplung Dr und Torsionsschwingungsdämpfer T. Kupplungs- und Dämpferspiel werden mit Hilfe einer die Kupplungsglocke 9 und die Halbschale 7 des Sekundärelements 6 des Torsionsschwingungsdämpfers T beabstandenden Tellerfeder 10 und des Sicherungsrings 13 eingestellt.

Geht man nunmehr davon aus, dass von dem hier nicht dargestellten Verbrennungsmotor ein Drehmoment erzeugt wird, so wird dieses über die nicht dargestellte Kurbelwelle (deren Position jedoch durch einen mit dem Bezugszeichen 2 gekennzeichneten Pfeil angegeben ist), direkt oder indirekt über die Primärnabe 4 auf das Primärelement 5 des Torsionsschwingungsdämpfer T geleitet. Radialschwingungen werden von der Federeinrichtung 14, 15 gedämpft und das Drehmoment wird weiter auf das Sekundärelement 6 übertragen. Das Sekundärelement 6 überträgt das Drehmoment weiter auf die Kupplungsglocke 9, die Kupplungsnabe 49 sowie den gemeinsamen Lamellenträger 31, 32 der radial äußeren und der radial inneren Kupplungen K1, K2. Je nach Stellung der Betätigungskolben 34, 35 erfolgt eine Weiterleitung des Drehmoments über einen der beiden Lamellenträger 30, 33 auf eine der beiden Getriebeeingangswellen 20, 21.

Zum Aufbringen der Gegenkraft auf die jeweiligen Lamellenpakete beim Betätigen der Kupplungen K1, K2 durch den jeweils zugeordneten Betätigungskolben 34, 35 sind Endscheiben 71, 72 vorgesehen, welche das Lamellenpaket auf der dem jeweiligen Betätigungskolben 34, 35 gegenüberliegenden Seite abschließen bzw. abstützen. Diese Endscheiben 71, 72 werden bei Kupplungen nach dem Stand der Technik im allgemeinen von Stahllamellen gebildet, welche von einem der zugeordneten Lamellenträgern getragen werden und welche vermittels eines Sicherungsrings anschlagbegrenzt sind.

Die Erfindung bezieht sich nunmehr im wesentlichen auf die konkrete Ausgestaltung der Endscheiben 71, 72. Erfindungsgemäß ist hier eine der beiden Endscheiben 71, 72, nämlich die mit dem Bezugszeichen 71 gekennzeichnete Endscheibe in an sich bekannter Art ausgebildet. Diese Endscheibe 71 ist als Stahllamelle mit z.T. etwas verdickten Bereichen ausgeführt. Diese Endscheibe 71 ist mittels eines Sicherungsrings 73 einseitig axial abgestützt. Die andere Endscheibe 72 ist Bestandteil des gemeinsamen Lamellenträgers 31, 32, also einstückig mit diesem ausgeführt. Der gemeinsame Lamellenträger 31, 32 ist zu diesem Zweck in der Art einer Halbschale mit einem zylindrischen Abschnitt 63 und einem reifförmigen Bodenabschnitt ausgeführt. Der zylindrische Abschnitt 63 trägt wie oben bereits ausführlich beschrieben wurde die Außenlamellen 38 der radial inneren Kupplung K2 und die Innenlamellen 37 der radial äußeren Kupplung K1. Der Bodenabschnitt des gemeinsamen Lamellenträgers 31, 32 bildet die Endscheibe 72 für das Lamellenpaket der radial inneren Kupplung K2.

Die Endscheibe 72 weist in besonderer Ausgestaltung eine Ringkuppe 74 auf, welche in Richtung des angrenzenden Lamellenpakets ausgerichtet ist. An dieser Ringkuppe 74 stützt sich die letzte Lamelle des Lamellenpakets beim Betätigen der Kupplung durch den Betätigungskolben 35 ab. Sie dient dazu, einen mittleren Kraftangriffsradius an der zu der Endscheibe 72 benachbarten Lamelle der radial inneren Lamellenkupplung K2 einzustellen. Auf diese Weise lässt sich sowohl die Kraftübertragung als solche als auch die lokale Wärmeentwicklung im eingekuppelten Zustand gezielt einstellen.

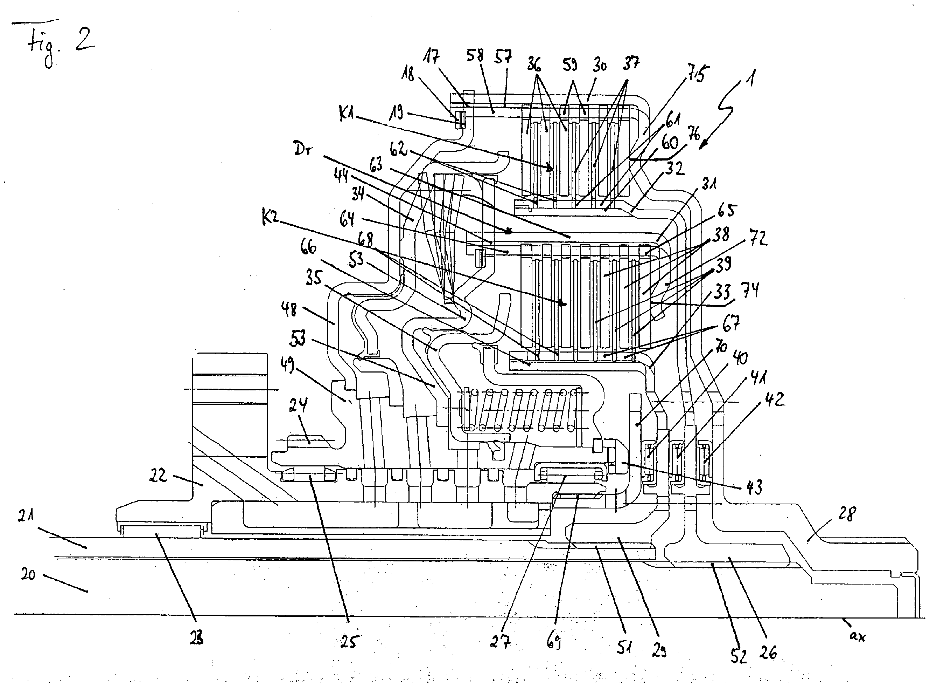

Die Figur 2 zeigt ein zweites Ausführungsbeispiel einer Kupplungsanordnung 1. Bei der hier dargestellten Kupplungsanordnung 1 handelt es sich um eine Doppelkupplung Dr in radial geschachtelter Anordnung mit einer radial äußeren Kupplung K1 und einer radial inneren Kupplung K2 ähnlich der obigen beschriebenen Art. Dieser Doppelkupplung Dr ist jedoch hier kein Torsionsschwingungsdämpfer vorgeschaltet.

Die radial äußere Kupplung K1 umfasst einen Außenlamellenträger 30 sowie einen Innenlamellenträger 32. Beide Lamellenträger 30, 32 sind in der Art von Halbschalen ausgebildet. Der zylindrische Teil 57 des Außenlamellenträgers 30 weist am Innenumfang eine Innenverzahnung 58 auf. In diese Innenverzahnung 58 greift jeweils in eine entsprechende Außenverzahnung 59 von im vorliegenden Ausführungsbeispiel als Stahllamellen ausgeführten Außenlamellen 36 ein. In korrespondierender Weise weist der zylindrische Teil 60 des Innenlamellenträgers 32 am Außenumfang eine Außenverzahnung 61 auf, in welche eine entsprechende Innenverzahnung 62 hier als Belaglamellen ausgeführter Innenlamellen 37 eingreift. Außenlamellen 36 und Innenlamellen 37 sind derart zwischen die zylindrischen Bereiche 57, 60 der Außen- bzw. Innenlamellenträger 30, 32 eingeführt, dass in axialer Richtung jeweils auf eine Außenlamelle 36 eine Innenlamelle 37 folgt und umgekehrt. Die Außen- und Innenlamellen 36, 37 sind mittels eines Betätigungskolbens 34 in Reibeingriff und außer Reibeingriff verbringbar.

Die radial innere Kupplung K2 ist prinzipiell in gleicher Weise wie die radial äußere Lamellenkupplung K1 ausgeführt. Auch hier ist ein halbschalenförmiger Außenlamellenträger 31 und ein halbschalenförmiger Innenlamellenträger 33 vorgesehen. Der zylindrische Teil 63 des Außenlamellenträgers 31 weist innenumfangsseitig eine Innenverzahnung 64 auf, in welche eine Außenverzahnung 65 entsprechender als Stahllamellen ausgeführter Außenlamellen 38 eingreift. Korrespondierend hierzu weist der zylindrische Abschnitt 66 der Innenlamellenträgerhalbschale 33 eine Außenverzahnung 67 auf, welche die Innenverzahnungen 68 entsprechender Innenlamellen 39 aufnimmt. Eine Innenlamelle 39 ist hiermit benachbart zu zwei Außenlamellen 38, eine Außenlamelle 38 ist benachbart zu zwei Innenlamellen 39 ein Lamellenpaket bildend angeordnet. Die Außen- und Innenlamellen 38, 39 können mit Hilfe eines Betätigungskolbens 35 in Reibeingriff und außer Reibeingriff verbracht werden.

Der Außenlamellenträger 31 der radial inneren Kupplungen K2 ist über eine Verzahnung 44 drehfest mit einer Seitenscheibe 53 verbunden. Diese Seitenscheibe 53 ist wiederum drehfest mit einer Kupplungsnabe 49 verbunden. In ähnlicher Weise ist der Außenlamellenträger 30 der radial äußeren Kupplung K1 über eine Verzahnung 17 mit einer Seitenscheibe 48 verbunden, welche wiederum drehfest mit der Kupplungsnabe 49 verbunden ist. Die ein Pumpenantriebszahnrad 24 tragende Kupplungsnabe 49, welche im Wesentlichen die Form eines Zylinders aufweist, ist am Außenumfang eines feststehenden Kupplungssupports 22 drehbar gelagert. Die drehbare Lagerung erfolgt über zwei Radialnadellager 25, 27.

Der Kupplungssupport 22 nimmt zwei koaxial zueinander angeordnete Getriebeeingangswellen 20, 21, eine Hohlwelle 21 und eine Vollwelle 20, auf. Die die Vollwelle 20 umgreifende Hohlwelle 21 ist dabei radial mittels eines Radialnadellagers 23 im Kupplungssupport 22 drehbar gelagert.

Die Hohlwelle 21 ist über eine Steckverzahnung 51 mit einer Nabe 29 des Innenlamellenträgers 33 der radial inneren Kupplung K2 verbunden. Die Vollwelle 20 ist über eine Steckverzahnung 52 mit einer Nabe 26 des Innenlamellenträgers 32 der radial äußeren Lamellenkupplung K1 drehfest verbunden.

Vier Axiallager 40, 41, 42, 43 beabstanden die gegeneinander verdrehbaren Naben 49, 29, 28 der Lamellenträger 30, 32, 33 der Doppelkupplung Dr, einer mittels eines Gewindes 69 drehfest mit dem Kupplungssupport 22 verbundenen Halbschale 70 sowie der Kupplungsnabe 49. Das Kupplungsspiel wird mit Hilfe einer die Scheibe 48 und die Halbschale 30 beabstandenden Sicherungsrings 18 eingestellt.

Der Innenlamellenträger 32 der radial äußeren Lamellenkupplung K1 und der Innenlamellenträger 33 der radial inneren Kupplung K2 bilden die Ausgangsseiten der Doppelkupplung Dr. Die Kupplungsnabe 49 und die mit dieser drehfest verbundenen Außenlamellenträger 30, 31 der radial äußeren und der radial inneren Kupplungen K1, K2 stellen nunmehr die Eingangsseite der Doppelkupplung Dr dar.

Geht man nunmehr davon aus, dass von dem hier nicht dargestellten Verbrennungsmotor ein Drehmoment erzeugt wird, so wird dieses über die nicht dargestellte Kurbelwelle und die Nabe 28 auf den Außenlamellenträger 30 der radial äußeren Kupplung K1 geleitet. Über die mit diesem Außenlamellenträgre 30 drehfest verbundene Seitenscheibe 48, die Kupplungsnabe 49 und die Seitenscheibe 53 besteht weiter eine drehfeste Verbindung zum Außenlamellenträger 31 der radial inneren Kupplung K2. Je nach Stellung der Betätigungskolben 34, 35 erfolgt eine Weiterleitung des Drehmoments über einen der beiden Innenlamellenträger 32, 33 auf eine der beiden Getriebeeingangswellen 20, 21.

Zum Aufbringen der Gegenkraft auf die jeweiligen Lamellenpakete beim Betätigen der Kupplungen K1, K2 durch den jeweils zugeordneten Betätigungskolben 34, 35 sind Endscheiben 75, 72 vorgesehen, welche das Lamellenpaket auf der dem jeweiligen Betätigungskolben 34, 35 gegenüberliegenden Seite abschließen bzw. abstützen. Erfindungsgemäß sind die Endscheiben 75, 72 jeweils Bestandteil der zugeordneten Außenlamellenträger 30, 31. Beide Endscheiben 75, 72 sind einstückig mit dem jeweils zugehörigen Außenlamellenträger 30, 31 ausgeführt. Die Lamellenträger 30, 31 sind zu diesem Zweck halbschalenförmig ausgeführt, nämlich mit einem zylindrischen Abschnitt 57, 63 und einem (im Falle der radial inneren Kupplung K2 reifförmigen) Bodenabschnitt. Die zylindrischen Abschnitte 57, 63 tragen - wie oben bereits ausführlich beschrieben wurde- die Außenlamellen 36, 38 der radial inneren und der radial äußeren Kupplungen K1, K2. Die Bodenabschnitte der Lamellenträger 30, 31 bilden die Endscheiben 75, 72 für die entsprechenden Lamellenpakete der radial inneren und der radial äußeren Kupplungen K1, K2.

Beide Endscheiben 75, 72 weisen Ringkuppen 74, 76 auf, welche in Richtung des jeweils angrenzenden Lamellenpakets ausgerichtet sind. An diesen Ringkuppen 74, 76 stützen sich die jeweils letzten Lamellen des jeweils zugeordneten Lamellenpakets beim Betätigen der entsprechenden Kupplung durch die korrespondierenden Betätigungskolben 34, 35 ab. Die Ringkuppen 74, 76 dienen dazu, mindestens einen Kraftangriffsradius an der jeweiligen zu der entsprechenden Endscheibe 75, 72 benachbarten Lamelle der radial inneren Lamellenkupplung K2 bzw. der radial äußeren Kupplung K1 einzustellen. Auf diese Weise lässt sich sowohl die Kraftübertragung als solche als auch die lokale Wärmeentwicklung im eingekuppelten Zustand gezielt einstellen.

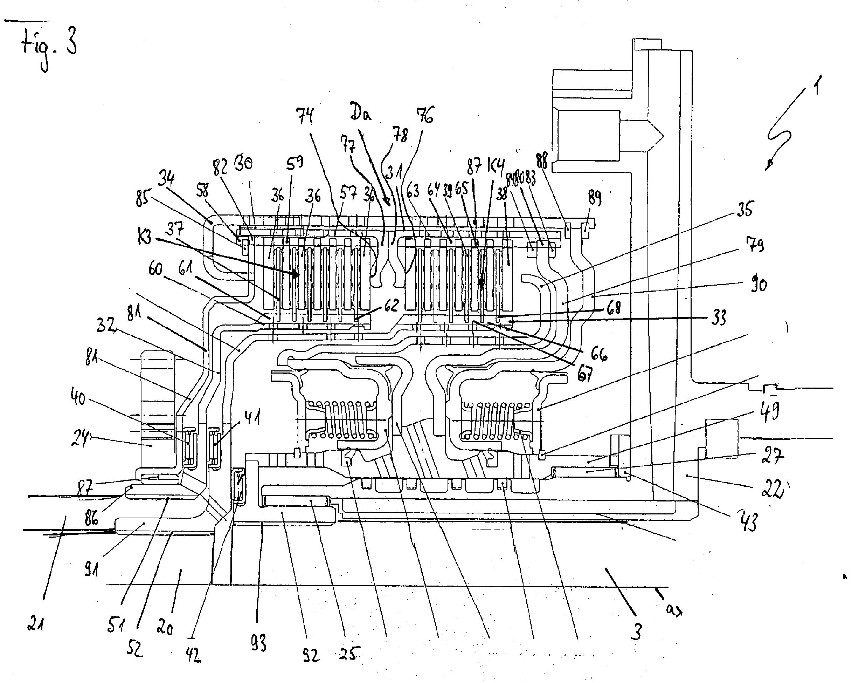

Die Figur 3 zeigt ein drittes Ausführungsbeispiel einer erfindungsgemäßen Kupplungsanordnung 1 im Axialhalbschnitt. Abweichend von den vorigen Beispielen umfasst die in Figur 3 gezeigte Kupplungsanordnung eine Doppelkupplung Da, bei welcher die Lamellenpakete der zugehörigen einzelnen Kupplungen K3, K4 axial nebeneinander angeordnet sind. Die Doppelkupplung Da ist eingangsseitig direkt oder indirekt mit einem Verbrennungsmotor koppelbar. Ausgangsseitig besteht eine Verbindung zu zwei Getriebeeingangswellen 20, 21, über welche ein eingangsseitig eingeleitetes Drehmoment wahlweise ausgeleitet werden kann.

Die Doppelkupplung Da umfasst die beiden Kupplungen K3, K2. Um eine Bezugnahme in eindeutig unterscheidbarer Weise vornehmen zu können, wird die sich auf der Antriebsseite befindliche Kupplung K4 als antriebsseitige Kupplung K4 und die dem Getriebe zugewandte Kupplung K3 als abtriebsseitige Kupplung K3 bezeichnet.

Die abtriebsseitige Kupplung K3 umfasst einen Außenlamellenträger 30 sowie einen Innenlamellenträger 32. Beide Lamellenträger 30, 32 sind in der Art von Halbschalen ausgebildet. Der zylindrische Teil 57 des Außenlamellenträgers 30 weist am Innenumfang eine Innenverzahnung 58 auf. In diese Innenverzahnung 58 greift jeweils in eine entsprechende Außenverzahnung 59 von im vorliegenden Ausführungsbeispiel als Stahllamellen ausgeführten Außenlamellen 36 ein. In korrespondierender Weise weist der zylindrische Teil 60 des Innenlamellenträgers 32 am Außenumfang eine Außenverzahnung 61 auf, in welche eine entsprechende Innenverzahnung 62 hier als Belaglamellen ausgeführter Innenlamellen 37 eingreift. Außenlamellen 36 und Innenlamellen 37 sind derart zwischen die zylindrischen Bereiche 57, 60 der Außen- bzw. Innenlamellenträger 30, 32 eingeführt, dass in axialer Richtung jeweils auf eine Außenlamelle 36 eine Innenlamelle 37 folgt und umgekehrt. Die Außen- und Innenlamellen 36, 37 sind mittels eines Betätigungskolbens 34 in Reibeingriff und außer Reibeingriff verbringbar.

Die antriebsseitige Kupplung K4 ist prinzipiell in gleicher Weise wie die abtriebsseitige Lamellenkupplung K3 ausgeführt. Auch hier ist ein halbschalenförmiger Außenlamellenträger 31 und ein halbschalenförmiger Innenlamellenträger 33 vorgesehen. Der zylindrische Teil 63 des Außenlamellenträgers 31, 32 weist innenumfangsseitig eine Innenverzahnung 64 auf, in welche eine Außenverzahnung 65 entsprechender als Stahllamellen ausgeführter Außenlamellen 38 eingreift. Korrespondierend hierzu weist der zylindrische Abschnitt 66 der Innenlamellenträgerhalbschale 33 eine Außenverzahnung 67 auf, welche die Innenverzahnungen 68 entsprechender Innenlamellen 39 aufnimmt. Eine Innenlamelle 39 ist jeweils benachbart zu zwei Außenlamellen 38 und eine Außenlamelle 38 ist jeweils benachbart zu zwei Innenlamellen 39 ein Lamellenpaket bildend angeordnet. Die Außen- und Innenlamellen 38, 39 können mit Hilfe eines Betätigungskolbens 35 in Reibeingriff und außer Reibeingriff verbracht werden.

Eine Besonderheit der gesamten Kupplungsanordnung besteht darin, dass die beiden Außenlamellenträger 30, 31 der benachbarten Kupplungen K3, K4 mit ihren ringscheibenförmigen Bodenabschnitten 77, 78 drehfest miteinander verbunden sind. Die Verbindung und Ausgestaltung der Außenlamellenträger 30, 31 erfolgt derart, dass sie einen bezüglich der Verbindungsebene im wesentlichen symmetrischen und für die Außenlamellen 36, 38 beider Kupplungen K3, K4 gemeinsamen Außenlamellenträger bilden. Nachfolgend wird daher für diesen die Außenlamellen 38 der antriebsseitigen Kupplung K4 und die Außenlamellen 37 der abtriebsseitigen Kupplung K3 tragenden Lamellenträger 30, 31 die Bezeichnung gemeinsamer Lamellenträger 30, 31 verwendet. Der gemeinsame Lamellenträger 31,32 der Kupplungen K3, K4 ist über eine Verzahnung 80 drehfest mit einer Seitenscheibe 79 verbunden und mittels zweier Sicherungsringe 83, 84 axial unverschieblich gehalten. Diese Seitenscheibe 79 ist wiederum drehfest mit einer Kupplungsnabe 49 verbunden. Die Kupplungsnabe 49, welche im Wesentlichen die Form eines Zylinders aufweist, ist am Außenumfang eines drehfesten Kupplungssupports 22 um eine Drehachse ax drehbar gelagert. Die drehbare Lagerung erfolgt über zwei Radialnadellager 25, 27. Die Kupplungsnabe 49 ist mit einer Antriebsnabe 92 drehfest verbunden. Diese Antriebsnabe 92 ist über eine Steckverzahnung 93 mit einer Antriebswelle 3 verbunden.

Zur mechanischen Unterstützung des vergleichsweise axial langen gemeinsamen Außenlamellenträgers 30, 31 ist eine weitere Seitenscheibe 81 vorgesehen. Diese Seitenscheibe 81 ist mit dem anderen Ende des gemeinsamen Außenlamellenträgers 30, 31 über eine Verzahnung 82 drehfest verbunden. Es ist ein Sicherungsring 85 vorgesehen, welcher die axiale Beweglichkeit der Seitenscheibe 81 gegenüber dem gemeinsamen Außenlamellenträger 30, 31 anschlagbegrenzt. Die Seitenscheibe 81 ist an einer Nabe 86 des Innenlamellenträgers 32 der abtriebsseitigen Kupplung K3 über ein Radialnadellager 87 um die Drehachse ax drehbar gelagert und auf diese Weise den gemeinsamen Außenlamellenträger 30, 31 unterstützend radial abgestützt. Neben der Unterstützung des vergleichsweise langen gemeinsamen Außenlamellenträgers 30, 31 hat die Seitenscheibe 81 auch die Aufgabe, ein Pumpenantriebszahnrad 24 zu tragen.

Auch der Betätigungskolben 34 der abtriebsseitigen Kupplung K3 ist in besonderer Weise ausgebildet. Er umfasst einen Zylinder 87, welcher den gemeinsamen Außenlamellenträger 30, 31 über dessen gesamter axialer Erstreckung umgreift, und eine mit diesem mittels zweier Sicherungsringe 88, 89 in Achsrichtung verschiebefest verbundene Halbschale 90. Die Halbschale 90 bildet den mit einem Druckraum zusammenwirkenden Kolbenabschnitt, der Zylinder 87 dient der Kraftübertragung von der antriebsseitig angeordneten Halbschale 90 zum Lamellenpaket der abtriebsseitig angeordneten Kupplung K3.

Die beiden Getriebeeingangswellen 20, 21 sind koaxial zueinander angeordnet. So weist die Getriebeeingangswelle 21 die Form eines Hohlzylinders aus. Sie ist von der anderen Getriebeeingangswelle 20, einer Vollwelle 20, zentral durchsetzt. Die Hohlwelle 21 ist über eine Steckverzahnung 51 mit der Nabe 86 des Innenlamellenträgers 33 der abtriebsseitigen Kupplung K3 verbunden. Die Vollwelle 20 ist über eine Steckverzahnung 52 mit einer Nabe 91 des Innenlamellenträgers 33 der antriebsseitigen Lamellenkupplung K4 drehfest verbunden.

Vier Axiallager 40, 41, 42, 43 beabstanden die gegeneinander verdrehbaren Naben 81, 86, 91, 49 der Kupplung Da.

Geht man nunmehr davon aus, dass von dem hier nicht dargestellten Verbrennungsmotor ein Drehmoment erzeugt wird, so wird dieses über die Antriebswelle 3, die Kupplungsnabe 49 und die Seitenscheibe 79 zum gemeinsamen Außenlamellenträger 30, 31 übertragen. Je nach Stellung der Betätigungskolben 34, 35 erfolgt eine Weiterleitung des Drehmoments über einen der beiden Innenlamellenträger 32, 33 auf eine der beiden Getriebeeingangswellen 20, 21.

Zum Aufbringen der Gegenkraft auf die jeweiligen Lamellenpakete beim Betätigen der Kupplungen K1, K2 durch den jeweils zugeordneten Betätigungskolben 34, 35 sind Endscheiben 77, 78 vorgesehen, welche das Lamellenpaket auf der dem jeweiligen Betätigungskolben 34, 35 gegenüberliegenden Seite abschließen bzw. abstützen. Diese Endscheiben werden bei Kupplungen nach dem Stand der Technik im allgemeinen von Stahllamellen gebildet, welche von einem der zugeordneten Lamellenträgern getragen werden und welche vermittels eines Sicherungsrings anschlagbegrenzt sind. Aus der EP 1 195 537 A1 ist es auch bekannt, die Endscheiben wie im vorliegenden Ausführungsbeispiel als Bestandteil eines gemeinsamen Lamellenträgers auszuführen. Abweichend von der in der EP 1 195 537 A1 beschriebenen Ausführung sieht die Erfindung im vorliegenden Ausführungsbeispiel vor, jeder Einzelkupplung ein eigenes Außen-/Innenlamellenträgerpaar 30, 31, 32, 33 zuzuordnen, wobei die Außenlamellenträger 30, 31 jeweils die Form einer Halbschale aufweisen, deren Bodenabschnitte einerseits die vorerwähnten Endscheiben 77, 78 bilden und welche darüber hinaus derart miteinander verbunden sind, dass sie einen gemeinsamen (aber zweiteiligen) Außenlamellenträger 30, 31 bilden. Es sei darauf hingewiesen, dass es auch ausreichen würde, nur einen der beiden Außenlamellenträger 30 oder 31 mit einem als Endplatte 78, 79 wirkenden Bodenplattenabschnitt zu versehen, aus Symmetrie-, Herstellungs- und Montagegründen wird die in der Figur 3 dargestellte Lösung jedoch in aller Regel zu bevorzugen sein.

Ähnlich wie in den vorstehend beschriebenen Ausführungsvarianten gemäß den Figuren 1 und 2 weisen die Endscheiben 78, 79 in besonderer Ausgestaltung Ringkuppen 74, 76 auf, welche in Richtung des jeweils angrenzenden Lamellenpakets ausgerichtet sind. Sie dienen dazu, mindestens einen Kraftangriffsradius an der jeweiligen zu den Endscheiben 78, 79 benachbarten Lamelle einzustellen. Auf diese Weise lässt sich sowohl die Kraftübertragung als solche als auch die lokale Wärmeentwicklung im eingekuppelten Zustand gezielt einstellen.

### Bezugszeichenliste

- 1: Doppelkupplungseinrichtung
- 2: Kurbelwelle
- 3: Antriebswelle
- 4: Primärflansch
- 5: Primärelement
- 6: Sekundärelement
- 7: abtriebsseitiges Sekundärteilelement
- 8: antriebsseitiges Sekundärteilelement
- 9: Kupplungsglocke
- 10: Tellerfeder
- 11: Verzahnung
- 12: Verzahnung
- 13: Sicherungsring
- 14: äußere Schraubenfeder
- 15: innere Schraubenfeder
- 16: Radialnadellager mit axialer Abstützfunktion
- 17: Verzahnung
- 18: Sicherungsring
- 20: Vollwelle
- 21: Hohlwelle
- 22: Kupplungssupport
- 23: Radialnadellager
- 24: Pumpenantriebszahnrad
- 25: Radialnadellager
- 26: Nabe des Innenlamellenträgers der radial äußeren Kupplung
- 27: Nabe des Innenlamellenträgers der radial äußeren Kupplung
- 28: Nabe
- 29: Nabe
- 30: Außenlamellenträger
- 31: Innenlamellenträger
- 32: Innenlamellenträger
- 33: Innenlamellenträger
- 34: Betätigungskolben
- 35: Betätigungskolben
- 36: Außenlamellen
- 37: Innenlamellen
- 38: Außenlamellen
- 39: Innenlamellen
- 40: Axiallager
- 41: Axiallager
- 42: Axiallager
- 43: Axiallager
- 44: Verzahnung
- 45: Radialnadellager
- 46: Schwungmasse
- 47: Seitenscheibe
- 48: Seitenscheibe
- 49: Kupplungsnabe
- 50: Radialnadellager
- 51: Steckverzahnung
- 52: Steckverzahnung
- 53: Halbschale
- 55: Primärmitnehmer
- 56: Sekundärmitnehmer
- 57: zylindrischer Teil
- 58: Innenverzahnung
- 59: Außenverzahnung
- 60: zylindrischer Teil
- 61: Außenverzahnung
- 62: Innenverzahnung
- 63: zylindrischer Teil
- 64: Innenverzahnung
- 65: Außenverzahnung
- 66: zylindrischer Teil
- 67: Außenverzahnung
- 68: Innenverzahnung
- 69: Gewinde
- 70: scheibenförmiger Teil
- 71: Endscheibe der radial äußeren Kupplung
- 72: Endscheibe der radial inneren Kupplung
- 73: Sicherungsring
- 74: Ringkuppe
- 75: Endscheibe der radial äußeren Kupplung
- 76: Ringkuppe
- 77: Endscheibe der abtriebsseitigen Kupplung K3
- 78: Endscheibe der antriebsseitigen Kupplung K4
- 79: Seitenscheibe
- 80: Verzahnung
- 81: Seitenscheibe
- 82: Verzahnung
- 83: Sicherungsring
- 84: Sicherungsring
- 85: Sicherungsring
- 86: Nabe
- 87: Radialnadellager
- 88: Sicherungsring
- 89: Sicherungsring
- 90: Halbschale
- 91: Nabe
- 92: Antriebsnabe
- 93: Steckverzahnung
- Dr: Doppelkupplung in radial geschachtelter Bauart
- Da: Doppelkupplung in achsparalleler Bauart
- K3: abtriebsseitige Kupplung
- K4: antriebsseitige Kupplung
- K1: radial äußere Kupplung
- K2: radial innere Kupplung
- T: Torsionsschwingungsdämpfer
- ax: Drehachse

## Patentansprüche

1. Kupplungsanordnung (1) mit einer Kupplung (K3)
- mit einem Außenlamellen (36) tragenden Außenlamellenträger (30),
- mit einem Innenlamellen (37) tragenden Innenlamellenträger (32), wobei
- die Außenlamellen (36) und die Innenlamellen (37) ein Lamellenpaket bilden,
- mit einer Endscheibe (77), gegen die sich das Lamellenpaket beim Betätigen der Kupplung (K3) abstützt, wobei
- die Endscheibe (77) einstückig mit einem der Lamellenträger (30) ausgebildet ist,
und mit einer weiteren Kupplung (K4)
- mit einem weitere Außenlamellen (38) tragenden Außenlamellenträger (31),
- mit einem weitere Innenlamellen (39) tragenden Innenlamellenträger (33), wobei
- die Außenlamellen (38) des weiteren Außenlamellenträgers (31) und die Innenlamellen (39) des weiteren Innenlamellenträgers (33) ein weiteres Lamellenpaket bilden, wobei
- eine weitere Endscheibe (78) vorgesehen ist, gegen die sich das weitere Lamellenpaket beim Betätigen der weiteren Kupplung (K4) abstützt,
- die weitere Endscheibe (78) einstückig mit einem der weiteren Lamellenträger (31) ausgebildet ist, - wobei die Kupplungsanordnung (1) eine Doppelkupplung (K3, K4) in paralleler Bauweise aufweist,
**dadurch gekennzeichnet, dass**
- der eine der Lamellenträger (30) als Halbschale mit einem zylindrischen Bereich (57) und mit einem Bodenbereich (77) ausgebildet ist und
- der Bodenbereich (77) die Endscheibe (77) bildet,
- der weitere der Lamellenträger (31) als Halbschale mit einem zylindrischen Bereich (63) und mit einem Bodenbereich (78) ausgebildet ist und
- der Bodenbereich (78) die weitere Endscheibe (78) bildet, und dass
- die Bodenbereiche (77, 78) der Halbschalen des Lamellenträgers (30) und des weiteren Lamellenträgers (31) drehfest miteinander verbunden sind, und
- der Lamellenträger (30) und der weitere Lamellenträger (31) einen gemeinsamen, aber zweiteiligen, Außenlamellenträger oder einen gemeinsamen, aber zweiteiligen Innenlamellenträger bilden.

2. Kupplungsanordnung (1) nach Anspruch 1,
**dadurch gekennzeichnet, dass**
der Lamellenträger (30) und der weitere Lamellenträger (31), vorzugsweise im Bereich der integrierten Endscheibe, gegenläufig miteinander verbunden sind.

3. Kupplungsanordnung (1) nach Anspruch 1 oder 2,
**dadurch gekennzeichnet, dass**
der Lamellenträger (30) und der weitere Lamellenträger (31) im Wesentlichen identische Bauteile sind.

4. Kupplungsanordnung (1) mit einer Kupplung (K2)
- mit einem Außenlamellen (38) tragenden Außenlamellenträger (31),
- mit einem Innenlamellen (39) tragenden Innenlamellenträger (33), wobei
- die Außenlamellen (38) und die Innenlamellen (39) ein Lamellenpaket bilden,
- mit einer Endscheibe (72) gegen die sich das Lamellenpaket beim Betätigen der Kupplung (K2) abstützt, wobei
- die Endscheibe (72) einstückig mit einem der Lamellenträger (31) ausgebildet ist,
- der eine der Lamellenträger (31) als Halbschale mit einem zylindrischen Bereich (60) und mit einem Bodenbereich (72) ausgebildet ist und
- der Bodenbereich (72) die Endscheibe (72) bildet, wobei eine weitere Kupplung (K1) vorgesehen ist mit
- einem weitere Außenlamellen (36) tragenden Außenlamellenträger (30) und
- einem weitere Innenlamellen (37) tragenden Innenlamellenträger (32), wobei
- die Außenlamellen (36) des weiteren Außenlamellenträgers (30) und die Innenlamellen (37) des weiteren Innenlamellenträgers (32) ein weiteres Lamellenpaket bilden,
**dadurc**h **gekennzeichnet**, dass
- eine weitere Endscheibe (71) vorgesehen ist, gegen die sich das weitere Lamellenpaket beim Betätigen der weiteren Kupplung (K1) abstützt, und
der Lamellenträger (31) und der weitere Lamellenträger (32) einen gemeinsamen Lamellenträger (31, 32) für die Innenlamellen (37) eines der Lamellenpakete und für die Außenlamellen (38) des anderen der Lamellenpakete bilden.

5. Kupplungsanordnung (1) nach Anspruch 4,
**dadurch gekennzeichnet, dass**
sie eine Doppelkupplung in radial geschachtelter Bauweise ist.

6. Kupplungsanordnung (1) nach einem der vorherigen Ansprüche,
**dadurch gekennzeichnet, dass**
die Kupplungsanordnung (1) eine Doppelkupplung ist, die ausgangsseitig mit zwei Getriebeeingangswellen verbunden ist, über welche ein eingeleitetes Drehmoment wahlweise ausgeleitet werden kann.

7. Kupplungsanordnung (1) nach einem der vorhergehenden Ansprüche,
**dadurch gekennzeichnet, dass**
ein Drehmoment über einen Torsionsschwingungsdämpfer eingeleitet werden kann.

8. Kupplungsanordnung (1) nach Anspruch 6,
**dadurch gekennzeichnet, dass**
ein Drehmoment über eine Kupplungsglocke eingeleitet werden kann.

9. Kupplungsanordnung (1) nach Anspruch 8,
**dadurch gekennzeichnet, dass**
an der Kupplungsglocke eine zusätzliche Schwungmasse angebracht ist.

10. Kupplungsanordnung (1) nach einem der vorhergehenden Ansprüche,
**dadurch gekennzeichnet, dass**
der Bodenbereich (72, 75, 77, 78) wenigstens eine zu einer benachbarten Lamelle (36, 37, 38, 39) weisende Ringkuppe (74, 76) aufweist, um mindestens einen Kraftangriffsradius an der benachbarten Lamelle (36, 37, 38, 39) einzustellen.

## Claims

1. Clutch arrangement (1) having a clutch (K3)
- with an outer disc carrier (30) which carries outer discs (36),
- with an inner disc carrier (32) which carries inner discs (37),
- the outer discs (36) and the inner discs (37) forming a multiple disc assembly,
- with an end disc (77), against which the multiple disc assembly is supported during actuation of the clutch (K3),
- the end disc (77) being configured in one piece with one of the disc carriers (30),
and having a further clutch (K4)
- with an outer disc carrier (31) which carries further outer discs (38),
- with an inner disc carrier (33) which carries further inner discs (39),
- the outer discs (38) of the further outer disc carrier (31) and the inner discs (39) of the further inner disc carrier (33) forming a further multiple disc assembly,
- a further end disc (78) being provided, against which the further multiple disc assembly is supported during actuation of the further clutch (K4),
- the further end disc (78) being configured in one piece with one of the further disc carriers (31),
- the clutch arrangement (1) having a double clutch (K3, K4) in a parallel design,
**characterized in that**
- one of the disc carriers (30) is configured as a half shell with a cylindrical region (57) and with a bottom region (77), and
- the bottom region (77) forms the end disc (77),
- the further one of the disc carriers (31) is configured as a half shell with a cylindrical region (63) and with a bottom region (78), and
- the bottom region (78) forms the further end disc (78), and **in that**
- the bottom regions (77, 78) of the half shells of the disc carrier (30) and of the further disc carrier (31) are connected fixedly to one another so as to rotate together, and
- the disc carrier (30) and the further disc carrier (31) form a common but two-piece outer disc carrier or a common but two-piece inner disc carrier.

2. Clutch arrangement (1) according to Claim 1, **characterized in that** the disc carrier (30) and the further disc carrier (31) are connected to one another in an opposed manner, preferably in the region of the integrated end disc.

3. Clutch arrangement (1) according to Claim 1 or 2, **characterized in that** the disc carrier (30) and the further disc carrier (31) are substantially identical components.

4. Clutch arrangement (1) having a clutch (K2)
- with an outer disc carrier (31) which carries outer discs (38),
- with an inner disc carrier (33) which carries inner discs (39),
- the outer discs (38) and the inner discs (39) forming a multiple disc assembly,
- with an end disc (72), against which the multiple disc assembly is supported during actuation of the clutch (K2),
- the end disc (72) being configured in one piece with one of the disc carriers (31),
- one of the disc carriers (31) being configured as a half shell with a cylindrical region (60) and with a bottom region (72), and
- the bottom region (72) forming the end disc (72), a further clutch (K1) being provided with
- an outer disc carrier (30) which carries further outer discs (36), and
- an inner disc carrier (32) which carries further inner discs (37),
- the outer discs (36) of the further outer disc carrier (30) and the inner discs (37) of the further inner disc carrier (32) forming a further multiple disc assembly,
**characterized in that**
- a further end disc (71) is provided, against which the further multiple disc assembly is supported during actuation of the further clutch (K1), and
the disc carrier (31) and the further disc carrier (32) form a common disc carrier (31, 32) for the inner discs (37) of one of the multiple disc assemblies and for the outer discs (38) of the other one of the multiple disc assemblies.

5. Clutch arrangement (1) according to Claim 4, **characterized in that** it is a double clutch in a radially nested design.

6. Clutch arrangement (1) according to one of the preceding claims, **characterized in that** the clutch arrangement (1) is a double clutch which is connected on the output side to two transmission input shafts, via which an introduced torque can be output selectively.

7. Clutch arrangement (1) according to one of the preceding claims, **characterized in that** a torque can be introduced via a torsional vibration damper.

8. Clutch arrangement (1) according to Claim 6, **characterized in that** a torque can be introduced via a clutch housing.

9. Clutch arrangement (1) according to Claim 8, **characterized in that** an additional centrifugal mass is attached to the clutch housing.

10. Clutch arrangement (1) according to one of the preceding claims, **characterized in that** the bottom region (72, 75, 77, 78) has at least one annular dome (74, 76) which points towards an adjacent disc (36, 37, 38, 39), in order to set at least one force action radius on the adjacent disc (36, 37, 38, 39).

## Revendications

1. Ensemble d'embrayage (1) comprenant un embrayage (K3)
- avec un support de disques externes (30) portant des disques externes (36),
- avec un support de disques internes (32) portant des disques internes (37),
- les disques externes (36) et les disques internes (37) formant un paquet de disques,
- avec un disque d'extrémité (77) contre lequel s'appuie le paquet de disques lors de l'actionnement de l'embrayage (K3),
- le disque d'extrémité (77) étant réalisé d'une seule pièce avec l'un des supports de disques (30),
et comprenant un embrayage supplémentaire (K4)
- avec un support de disques externes (31) portant des disques externes supplémentaires (38),
- avec un support de disques internes (33) portant des disques internes supplémentaires (39),
- les disques externes (38) du support de disques externes supplémentaire (31) et les disques internes (39) du support de disques internes supplémentaire (33) formant un paquet de disques supplémentaires,
- un disque d'extrémité supplémentaire (78) étant prévu, contre lequel s'appuie le paquet de disques supplémentaire lors de l'actionnement de l'embrayage supplémentaire (K4),
- le disque d'extrémité supplémentaire (78) étant réalisé d'une seule pièce avec l'un des supports de disques supplémentaires (31),
- l'ensemble d'embrayage (1) présentant un double embrayage (K3, K4) de construction parallèle,
**caractérisé en ce que**
- l'un des supports de disques (30) est réalisé sous forme de demi-coque avec une région cylindrique (57) et avec une région de fond (77), et
- la région de fond (77) forme le disque d'extrémité (77),
- l'autre des supports de disques (31) est réalisé sous forme de demi-coque avec une région cylindrique (63) et avec une région de fond (78), et
- la région de fond (78) forme le disque d'extrémité supplémentaire (78), et **en ce que**
- les régions de fond (77, 78) des demi-coques du support de disques (30) et du support de disques supplémentaire (31) sont connectées l'une à l'autre de manière solidaire en rotation, et
- le support de disques (30) et le support de disques supplémentaire (31) forment un support de disques externes commun, mais en deux parties, ou un support de disques internes commun, mais en deux parties.

2. Ensemble d'embrayage (1) selon la revendication 1, **caractérisé en ce que**
le support de disques (30) et le support de disques supplémentaire (31) sont connectés l'un à l'autre en sens inverse, de préférence dans la région du disque d'extrémité intégré.

3. Ensemble d'embrayage (1) selon la revendication 1 ou 2,
**caractérisé en ce que**
le support de disques (30) et le support de disques supplémentaires (31) sont des composants essentiellement identiques.

4. Agencement d'embrayage (1) comprenant un embrayage (K2)
- avec un support de disques externes (31) portant des disques externes (38),
- avec un support de disques internes (33) portant des disques internes (39),
- les disques externes (38) et les disques internes (39) formant un paquet de disques,
- avec un disque d'extrémité (72) contre lequel s'appuie le paquet de disques lors de l'actionnement de l'embrayage (K2),
- le disque d'extrémité (72) étant réalisé d'une seule pièce avec l'un des supports de disques (31),
- l'un des supports de disques (31) étant réalisé sous forme de demi-coque avec une région cylindrique (60) et avec une région de fond (72) et
- la région de fond (72) formant le disque d'extrémité (72),
un embrayage supplémentaire (K1) étant prévu, avec
- un support de disques externes (30) portant des disques externes supplémentaires (36) et
un support de disques internes (32) portant des disques internes supplémentaires (37),
- les disques externes (36) du support de disques externes supplémentaire (30) et les disques internes (37) du support de disques internes supplémentaire (32) formant un paquet de disques supplémentaire,
**caractérisé en ce que**
- un disque d'extrémité supplémentaire (71) est prévu, contre lequel s'appuie le paquet de disques supplémentaire lors de l'actionnement de l'embrayage supplémentaire (K1), et
le support de disques (31) et le support de disques supplémentaire (32) forment un support de disques commun (31, 32) pour les disques internes (37) de l'un des paquets de disques et pour les disques externes (38) de l'autre des paquets de disques.

5. Ensemble d'embrayage (1) selon la revendication 4,
**caractérisé en ce**
**qu'**il s'agit d'un double embrayage de construction a emboîtement radial.

6. Ensemble d'embrayage (1) selon l'une quelconque des revendications précédentes,
**caractérisé en ce que**
l'ensemble d'embrayage (1) est un double embrayage qui est connecté du côté de la sortie à deux arbres d'entrée de boîte de vitesses, par le biais desquels un couple introduit peut être fourni en sortie de manière sélective.

7. Ensemble d'embrayage (1) selon l'une quelconque des revendications précédentes,
**caractérisé en ce**
**qu'**un couple peut être introduit par le biais d'un amortisseur d'oscillations de torsion.

8. Ensemble d'embrayage (1) selon la revendication 6,
**caractérisé en ce**
**qu'**un couple peut être introduit par le biais d'une cloche d'embrayage.

9. Ensemble d'embrayage (1) selon la revendication 8,
**caractérisé en ce qu'**une masse oscillante supplémentaire est montée sur la cloche d'embrayage.

10. Ensemble d'embrayage (1) selon l'une quelconque des revendications précédentes,
**caractérisé en ce que**
la région de fond (72, 75, 77, 78) présente au moins une coupelle annulaire (74, 76) tournée vers un disque adjacent (36, 37, 38, 39), afin d'ajuster au moins un rayon d'application de force sur le disque adjacent (36, 37, 38, 39).
